# FASCICULE DE BREVET EUROPEEN

(11) **EP 2 044 320 B1**
(45) Date de publication et mention de la délivrance du brevet: **23.03.2011**
(21) Numéro de dépôt: 07803847.8
(22) Date de dépôt: 05.07.2007
(51) Int. Cl.: F02M 31/04, F02M 31/13, F16K 1/22

(54) **VANNE AVEC CANAL DERIVE INCORPORANT UN ORGANE DE CHAUFFAGE ET CIRCUIT D'ADMISSION AVEC PRECHAUFFAGE DE L'AIR POUR MOTEUR THERMIQUE**
VENTIL MIT UMLEITUNGSKANAL MIT HEIZELEMENT UND VERBRENNUNGSMOTORANSAUGKREIS MIT LUFTVORWÄRMUNG
VALVE WITH BYPASS DUCT INCORPORATING A HEATING MEMBER AND COMBUSTION ENGINE INTAKE CIRCUIT WITH PREHEATING OF THE AIR

(30) Priorité: 25.07.2006 FR 0606803
(43) Date de publication de la demande: 08.04.2009
(73) Titulaire: Valeo Systèmes de Contrôle Moteur, 95800 Cergy (FR)
(72) Inventeur: ALBERT, Laurent, 95810 Vallangoujard (FR); COMORASSAMY, Yohan, 95800 Cergy Le Haut (FR); MAITRE, Michael, 95800 Cergy Le Haut (FR)
(74) Mandataire: Rolland, Jean-Christophe
(86) Numéro de dépôt international: PCT/FR2007/001142
(87) Numéro de publication internationale: WO 2008/012408

(56) Documents cités:
- EP-A1- 0 723 100
- DE-C1- 4 104 011
- DE-C1- 4 109 436
- JP-A- 61 072 859
- JP-A- 2000 110 951
- US-A- 4 445 480

## Description

La présente invention concerne un circuit d'admission d'air de moteur thermique utilisable par exemple pour mouvoir un véhicule automobile.

### ARRIERE PLAN DE L'INVENTION

L'alimentation d'un moteur thermique consiste principalement à introduire dans une chambre de combustion un flux d'air d'admission et un carburant liquide vaporisé dans le flux d'air d'admission. Le mélange du flux d'air et du carburant est réalisé dans la chambre de combustion ou en amont de celle-ci dans le circuit d'admission du moteur thermique.

Avec certains carburants, comme le gazole, le démarrage des moteurs est rendu difficile lorsque la température ambiante est inférieure à 5°C environ : la température du mélange air-gazole en fin de compression n'est pas suffisante pour provoquer l'auto-inflammation du mélange. Il en résulte des difficultés, si ce n'est une impossibilité, de démarrage du moteur thermique, et une combustion imparfaite tant que le moteur n'est pas suffisamment chaud.

Pour obvier à cet inconvénient, il est connu de réchauffer le mélange air-gazole au moyen d'un système de réchauffage constitué de bougies de préchauffage implantées dans la culasse du moteur thermique pour déboucher soit directement dans la chambre de combustion ou dans la chambre de turbulence du moteur thermique. Ce système de réchauffage est relativement coûteux du fait de l'implantation nécessaire des bougies sur la culasse, implantation qui influe également sur l'encombrement de la culasse.

Il est également connu de réchauffer l'air d'admission au moyen d'une grille chauffante s'étendant dans le conduit d'admission. Compte tenu des pertes de charge occasionnées par la grille, ce dispositif de chauffage n'est utilisable que dans les moteurs thermiques de forte cylindrée. Un circuit d'admission d'air selon le préambule de la revendication 1 est connu du document JP61072859.

### OBJET DE L'INVENTION

Il serait donc intéressant de disposer d'un moyen permettant de faciliter le démarrage des moteurs thermiques.

### RESUME DE L'INVENTION

A cet effet, on prévoit, selon l'invention, un circuit d'admission d'air pour moteur thermique selon la revendication 1. vanne pour circuit d'admission d'air de moteur thermique, comportant un conduit principal et un canal dérivé ayant des extrémités amont et aval débouchant dans le conduit principal, un organe de chauffage étant disposé dans le canal dérivé et la vanne comportant un organe d'obturation monté mobile entre une première position de passage d'un flux d'air dans le conduit principal et une deuxième position de passage d'un flux d'air dans le canal dérivé.

Le flux d'air est de la sorte réchauffé lors de son passage dans le canal dérivé. Le chauffage est rapide et ne nécessite qu'une puissance relativement modeste. Un tel réchauffage peut en outre être facilement mis en oeuvre pour un coût relativement faible et le moteur thermique a une structure relativement simple. De plus, en mode de fonctionnement normal, l'essentiel si ce n'est la totalité du flux d'air d'admission passe dans le conduit principal de sorte que l'organe de chauffage qui s'étend dans le canal dérivé n'occasionne pas de perte de charge.

D'autres caractéristiques et avantages de l'invention ressortiront à la lecture de la description qui suit d'un mode de mise en oeuvre particulier non limitatif de l'invention.

### BREVE DESCRIPTION DES DESSINS

Il sera fait référence aux dessins annexés, parmi lesquels :
- la figure 1 est une vue schématique partielle d'un moteur thermique conforme à l'invention, le papillon étant en position d'obturation ;
- les figures 2 et 3 sont des vues analogues à la figure 1, le papillon étant respectivement en position de dérivation et en position d'ouverture totale ;
- la figure 4 est une vue analogue à celle de la figure 1 illustrant une variante de réalisation.

### DESCRIPTION DETAILLEE DE L'INVENTION

L'invention est ici décrite en application à un moteur thermique, plus précisément un moteur thermique à combustion interne, fonctionnant au moyen d'un carburant à base de gazole. L'invention est cependant applicable à des moteurs fonctionnant avec d'autres types de carburant par exemple d'origine pétrolière ou d'origine biologique comme le diester.

Le moteur thermique généralement désigné en 50, schématisé sur les figures, comprend un circuit d'admission d'air, généralement désigné en 1.

Le circuit d'admission 1 comprend un conduit ayant une extrémité reliée à une prise d'air extérieure 20 et une extrémité opposée débouchant dans les chambres de combustion du moteur thermique (schématisées en 30 sur les figures).

Une vanne, généralement désignée en 15, est montée sur le circuit d'admission 1. La vanne 15 comprend un conduit principal 2 ayant des extrémités raccordées de façon connue en soi au conduit du circuit d'admission 1.

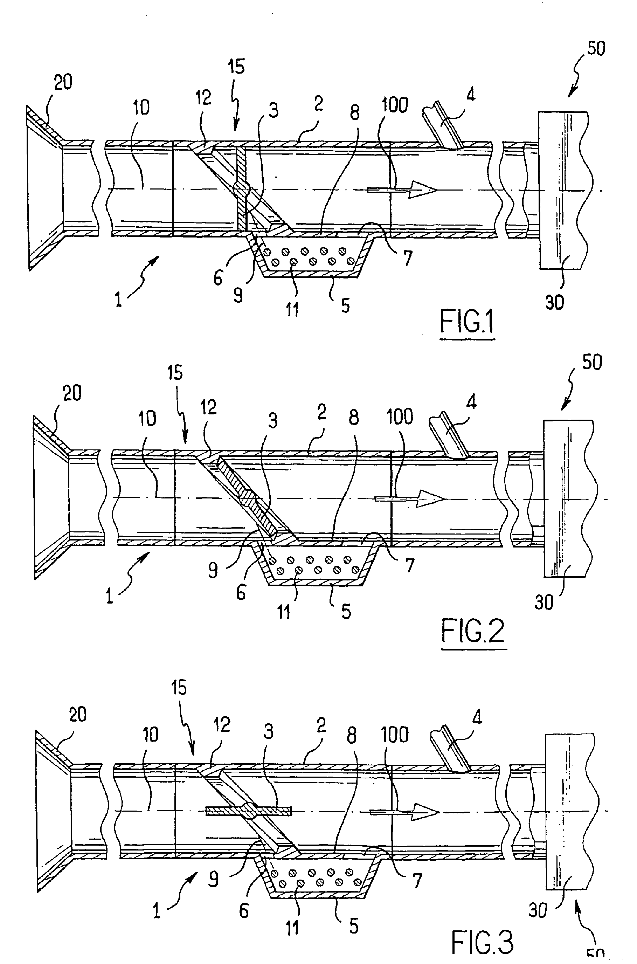

Un papillon 3 est monté de façon connue en elle-même dans le conduit principal 2 par un axe dont les extrémités sont reçues à pivotement dans des paliers solidaires du conduit principal 2 de telle manière que le papillon 3 puisse pivoter entre une position d'obturation du conduit principal 2 (représentée sur la figure 1) dans laquelle le papillon 3 est perpendiculaire à l'axe du conduit principal 2 et empêche une circulation d'air dans le conduit principal 2 et une position d'ouverture du conduit principal 2 (représentée sur la figure 3) dans laquelle le papillon 3 est parallèle à l'axe du conduit principal 2. Le papillon 3 est agencé et commandé de façon connue en elle-même pour pouvoir être maintenu dans des positions intermédiaires entre les positions d'obturation et d'ouverture de manière à réguler le débit d'air dans le conduit principal 2.

Un injecteur 4 de carburant débouche dans le conduit principal 2 en aval du papillon 3 par référence au sens d'écoulement du flux d'air en direction des chambres de combustion (symbolisé par la flèche 100). L'injecteur 4, classique, fait partie d'un circuit de carburant, connu en lui-même, relié à un réservoir de carburant pour amener le carburant jusqu'au conduit principal 2.

La vanne 15 comprend un canal dérivé 5 s'étendant parallèlement au conduit principal 2. Le canal dérivé 5 comporte une extrémité amont 6 et une extrémité aval 7 débouchant sur une surface latérale 8 du conduit principal 2 respectivement en amont et en aval (par référence au sens d'écoulement 100) du papillon 3 dans une position intermédiaire entre la position d'obturation et la position d'ouverture. Cette position intermédiaire du papillon 3 est une position de dérivation dans laquelle le papillon 3 est légèrement incliné par rapport à sa position d'obturation et a son bord périphérique au voisinage d'un siège 12 formé d'un redan s'étendant en saillie dans le conduit. Les extrémités amont et aval 6, 7 débouchent de part et d'autre du siège 12 en des points du conduit principal 2 sensiblement équidistants des points de fixation de l'axe du papillon 3 au conduit 2.

L'extrémité amont 6 a un axe 9 incliné par rapport à l'axe central 10 du conduit principal 2 en formant avec celui-ci un angle aigu au sommet orienté vers la prise d'air extérieure. Le papillon 3 dans sa position de dérivation s'étend sensiblement parallèlement à l'axe 9 de l'extrémité amont 7 pour guider le flux d'air vers le canal dérivé 5.

Le conduit principal 2 et le canal dérivé 5 sont par exemple en aluminium.

Un organe de chauffage 11, en l'occurrence des résistances, sont disposées dans le canal dérivé 2. Les résistances peuvent être par exemple de type CTP (à coefficient de température positif). L'organe de chauffage 11 est dimensionné pour permettre une élévation de la température de l'air jusqu'à une température permettant au mélange d'atteindre, en fin de compression dans la chambre de combustion, une température suffisante pour provoquer son auto-inflammation et entraîner le démarrage du moteur. A titre d'exemple, pour une température extérieure à -20°C, la puissance délivrée par l'organe de chauffage 11 est de l'ordre de 300 W. L'organe de chauffage 11 est régulé en température pour ne pas atteindre la température d'auto-inflammation ("flash point") du carburant ou de l'huile moteur et protéger les composants environnants.

Pour le démarrage du moteur, le papillon 3 est commandé dans sa position de dérivation, un flux d'air d'admission s'écoule vers les chambres de combustion en passant par le canal dérivé 5 de sorte que le flux d'air est réchauffé lorsqu'il arrive au niveau de l'injecteur 4. L'air ainsi réchauffé réchauffe lui-même le carburant sortant de l'injecteur 4. Tant que la phase de démarrage n'est pas terminée, voire tant que le moteur n'a pas atteint sa température minimale de fonctionnement nominal, le papillon 3 est commandé de manière à forcer le passage d'au moins une partie du flux d'air vers le canal dérivé 5 pour bénéficier du chauffage procuré par l'organe de chauffage 11.

On notera qu'aux faibles débits d'air rencontrés lors du démarrage et du fonctionnement à faible charge du moteur, le canal dérivé n'occasionne que peu de pertes de charge et ne perturbe pas le fonctionnement du moteur malgré le passage de l'air à travers la résistance chauffante.

Le canal dérivé 5 a une section inférieure à celle du conduit principal de sorte que lorsque la phase de démarrage est terminée et que le papillon 3 quitte définitivement sa position de dérivation vers sa position d'ouverture, le flux d'air s'écoule par le conduit principal 2 sans que le canal dérivé 5 et l'organe de chauffage 11 n'en perturbent l'écoulement. L'alimentation de l'organe de chauffage 11 peut être coupée automatiquement à la fin du démarrage ou lorsque le moteur a atteint sa température de fonctionnement.

Bien entendu, l'invention n'est pas limitée au mode de réalisation décrit et on peut y apporter des variantes de réalisation sans sortir du cadre de l'invention tel que défini par les revendications.

En particulier, le canal dérivé peut s'étendre en amont ou en aval du papillon 3 et/ou de l'injecteur 4.

La vanne peut être utilisée comme vanne doseuse d'air permettant de créer une dépression dans le conduit d'admission d'air pour favoriser le passage, dans le circuit d'admission d'air en aval de la vanne, de gaz recyclés provenant du circuit d'échappement.

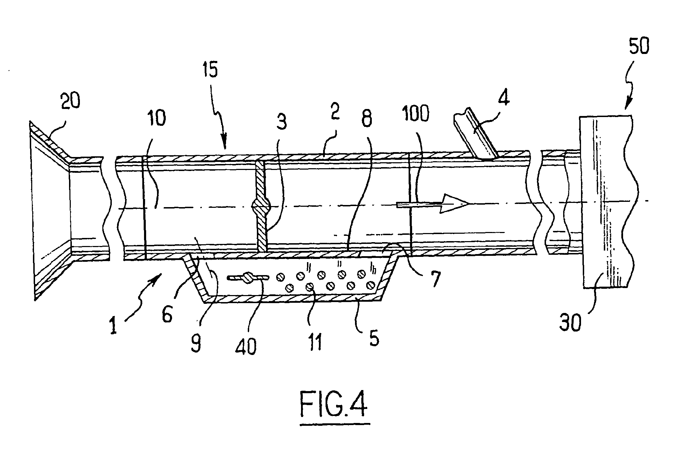

En variante, comme représenté à la figure 4, le papillon 3 n'a que deux positions à savoir une position d'obturation et une position d'ouverture. Le canal dérivé 5 a ses extrémités amont et aval 6 et 7 débouchant respectivement en amont et en aval du papillon 3 en position d'obturation. Un clapet indépendant 40 est monté en amont dans le canal dérivé 5 de l'organe de chauffage 11.

L'organe de chauffage peut avoir une structure différente de celle décrite et par exemple une structure en serpentin ou en grille.

Le moteur thermique peut avoir une structure différente de celle décrite. L'organe d'obturation du circuit d'admission peut être différent d'un papillon et comporter par exemple un clapet coulissant.

Il est possible de procéder à un préchauffage avant l'opération de démarrage proprement dite pour s'affranchir du temps de réponse des éléments chauffants (déclenchement du chauffage au moment du déverrouillage des portes par exemple).

Les valeurs chiffrées n'ont été données qu'à titre indicatif et peuvent être modifiées en fonction de l'architecture du moteur, sa cylindrée...

Le conduit du circuit d'admission peut être d'une seule pièce et le canal dérivé rapporté sur celui-ci ou le conduit et le canal dérivé peuvent être d'une seule pièce.

## Revendications

1. Circuit d'admission d'air (1) pour moteur thermique, comportant un conduit principal (2) et un organe d'obturation (3) monté dans le conduit principal pour être mobile entre une position d'ouverture du conduit et une position d'obturation du conduit principal, un organe de chauffage (11) étant disposé dans un canal dérivé (5) ayant des extrémités amont et aval (6, 7) débouchant dans le conduit principal, **caractérisé en ce que** l'organe d'obturation (3) possède une position intermédiaire de dérivation et les extrémités amont et aval (6, 7) débouchent de part et d'autre de l'organe d'obturation en position de dérivation.

2. Circuit selon la revendication 1, dans lequel un organe d'amenée (4) d'un carburant liquide est raccordé au conduit principal (2), et l'organe de chauffage (11) est dispose dans le circuit d'admission en amont de l'organe d'amenée (4) du carburant.

3. Circuit selon la revendication 1 ou 2, dans lequel l'organe d'obturation est un papillon (3) monte pour pivoter entre la position d'ouverture et la position d'obturation, l'extrémité amont (6) du canal dérivé (5) et le papillon étant agences de telle manière que le papillon en position de dérivation guide l'air d'admission vers l'extrémité amont du canal dérivé.

## Claims

1. Air intake circuit (1) for a heat engine, comprising a main duct (2) and a shutoff member (3) mounted in the main duct in order to be able to move between an open position of the duct and a shutoff position of the main duct, a heating member (11) is placed in a bypass channel (5) having upstream and downstream ends (6, 7) leading into the main duct, **characterized in that** the shutoff member (3) has an intermediate bypass position and the upstream and downstream ends (6, 7) lead onto either side of the shutoff member in the bypass position.

2. Circuit according to Claim 1, therein a liquid fuel supply member (4) is connected to the main duct (2), and the heating member (11) is placed in the intake circuit upstream of the fuel supply member (4).

3. Circuit according to Claim 1 or 2, therein the shutoff member is a butterfly element (3) mounted so as to pivot between the open position and the shutoff position, the upstream end (6) of the bypass channel (5) and the butterfly element being arranged so that the butterfly element in the bypass position guides the intake air to the upstream end of the bypass channel.

## Patentansprüche

1. Luftansaugkreislauf (1) für einen Verbrennungsmotor, mit einer Hauptleitung (2) und einem Verschlussglied (3), das so in der Hauptleitung angebracht ist, dass es zwischen einer Stellung zum Öffnen der Leitung und einer Stellung zum Verschließen der Hauptleitung beweglich ist, einem Heizglied (11), das in einem Umleitungskanal (5) mit einem stromaufwärtigen und einem stromabwärtigen Ende (6, 7), die in der Hauptleitung münden, angeordnet ist, **dadurch gekennzeichnet, dass** das Verschlussglied (3) eine Zwischenumleitungsstellung aufweist und das stromaufwärtige und stromabwärtige Ende (6, 7) auf beiden Seiten des Verschlussglieds in der Umleitungsstellung münden.

2. Kreislauf nach Anspruch 1, wobei ein Glied (4) zur Zuführung eines flüssigen Brennstoffs mit der Hauptleitung (2) verbunden ist und das Heizglied (11) in dem Zuführungskreislauf stromaufwärts des Glieds (4) zur Zuführung des Brennstoffs angeordnet ist.

3. Kreislauf nach Anspruch 1 oder 2, wobei das Verschlussglied eine Drosselklappe (3) ist, die zum Schwenken zwischen der Öffnungsstellung und der Verschlussstellung angebracht ist, wobei das stromaufwärtige Ende (6) des Umleitungskanals (5) und die Drosselklappe so angeordnet sind, dass die Drosselklappe in der Umleitungsstellung die Ansaugluft zum stromaufwärtigen Ende des Umleitungskanals führt.
